# EUROPÄISCHE PATENTSCHRIFT

(11) **EP 3 268 538 B1**
(45) Veröffentlichungstag und Bekanntmachung des Hinweises auf die Patenterteilung: **27.10.2021**
(21) Anmeldenummer: 16708079.5
(22) Anmeldetag: 26.02.2016
(51) Int. Cl.: E02D 7/02, E02D 7/22, E02D 13/06

(54) **VERFAHREN ZUR BODENDRUCKBEGRENZUNG EINER BAUMASCHINE UND BAUMASCHINE**
METHOD OF LIMITING THE SOIL PRESSURE OF A CONSTRUCTING MACHINE AND CONSTRUCTING MACHINE
PROCEDÉ DE LIMITER LE PRESSION D'UN SOL D'UNE MACHINE DE TRAVAIL ET MACHINE DE TRAVAIL

(30) Priorität: 12.03.2015 DE 102015003177
(43) Veröffentlichungstag der Anmeldung: 17.01.2018
(73) Patentinhaber: Liebherr-Werk Nenzing GmbH, 6710 Nenzing (AT)
(72) Erfinder: KOLLER, Alfred, 6844 Altach (AT)
(74) Vertreter: Laufhütte, Dieter
(86) Internationale Anmeldenummer: PCT/EP2016/000334
(87) Internationale Veröffentlichungsnummer: WO 2016/142038

(56) Entgegenhaltungen:
- DE-A1- 10 110 176
- DE-A1- 10 320 382
- DE-A1- 19 612 423
- DE-A1-102012 019 850
- DE-U1- 20 100 489
- JP-A- H03 115 090

## Beschreibung

Die vorliegende Erfindung Verfahren zur Bodendruckbegrenzung während des Betriebs eines Ramm- und / oder Bohrgerätes sowie ein Ramm- und / oder Bohrgerät mit einer Sensorik und Steuerung, die mittels Algorithmen zum Durchführen dieses Verfahrens konfiguriert ist.

Mobile Arbeitsmaschinen sind aus dem Stand der Technik bekannt und dienen beispielsweise dazu, Lasten zu bewegen oder maschinelle Arbeiten zu verrichten. Hierbei kann es erforderlich sein, die jeweilige Arbeitsmaschine zur Durchführung der Arbeiten entsprechend am Boden abzustützen. Geschieht dies nur fehlerhaft, so kann es vorkommen, dass die Arbeitsmaschine umstürzt. Insbesondere Mäklergeräte und Krane mit langen Auslegern sind diesbezüglich besonders gefährdet. Oft ist die Fehlerursache dabei nicht ein Überschreiten der zulässigen Traglast der Arbeitsmaschine, sondern ein Nachgeben des Untergrundes lange vor dem Erreichen der maximal zulässigen Traglast der Arbeitsmaschine. Derzeit gibt es keine Mittel, die aktuelle Tragfähigkeit des Bodens mit dem durch das Gerät im aktuellen Belastungszustand erzeugten Bodendruck zu vergleichen und so ein Nachgeben des Untergrundes zu vermeiden.

Die Einschätzung des Untergrundes ist für den Gerätebediener schwierig. Üblicherweise wird der Untergrund im Vorfeld durch einen Geologen oder eine sonstige fachkundige Person bestimmt, oftmals unter Einbeziehen diverser Messeinrichtungen.

Aus der DE 101 10 176 A1 sowie JPH03115090A sind Verfahren zur Lastmomentbegrenzung bekannt. Hierbei wird die aktuelle Belastung an einzelnen Stützfüßen gemessen und gegen entsprechende Schwellwerte verglichen, wobei bei Unterschreitung einer Minimalkraft eine mögliche Kippgefahr der Maschine erkannt wird. Aus der DE 123 382 A1 ist ein Verfahren zur Ermittlung der Tragfähigkeit des Untergrunds einer Arbeitsmaschine bekannt. Hierbei wird während des Anhebens der Arbeitsmaschine die Bodensetzung im Bereich der einzelnen Stützfüße ermittelt und darauf basierend die aktuelle Tragfähigkeit im Bereich der Stützfüße berechnet. Aus der DE 10 2012 019 850 A ist ein Ramm- und / oder Bohrgerät bekannt, welches aufgrund seiner Konfiguration mit einem hohen Mast in besonderem Maße gefährdet ist, bei ungünstigen Untergrundverhältnissen in kritische, also kippgefährdete Betriebszustände zu geraten. Die aus dem Stand der Technik bekannten Lösungen sind auf ein derartiges Gerät nicht anwendbar, da hier nicht auf Stützfüße zurückgegriffen werden kann. Das gilt insbesondere dann, wenn das Gerät im Fahrbetrieb ist.

Aufgabe der vorliegenden Erfindung ist es daher eine Arbeitsmaschine bzw. ein Verfahren bereitzustellen, bei dem das Umstürzen der Arbeitsmaschine aufgrund von nachgebendem Untergrund verhindert wird.

Diese Aufgabe wird durch ein Verfahren gemäß dem Anspruch 1 gelöst. Es umfasst die Schritte:
Bestimmen eines Grenzwertes in Gestalt des maximal zulässigen Bodendrucks durch manuelle Eingabe durch die Bedienperson und / oder Durchführung einer automatischen Messung; Einstellen der aktuellen Gerätekonfiguration wie insbesondere der Mäklerlänge oder der Ballastierung; Ermitteln der aktuellen Gerätebelastung und Berechnung des tatsächlichen Bodendrucks durch ein Rechenmodell und entsprechende Sensoren; Vergleichen des berechneten tatsächlichen Bodendrucks mit dem Grenzwert in Gestalt des maximal zulässigen Bodendrucks; und

Rückmelden des Vergleichsergebnisses an die Bedienperson der Arbeitsmaschine und / oder Stoppen einer bodendrucksteigernden Bewegung der Arbeitsmaschine wenn der tatsächliche Bodendruck den Grenzwert überschreitet, wodurch die Berücksichtigung des Grenzwertes in Gestalt des maximal zulässigen Bodendrucks zum Abschaltkriterium werden kann.

Hierbei kann vorteilhafterweise dem Fahrer an der aktuellen Geräte- bzw. Arbeitsmaschinenposition ein Verhältnis zwischen maximal ertragbarem Bodendruck und tatsächlich erzeugtem Bodendruck bekannt gegeben werden. Als Fahrerinformation kann dabei nicht nur ein Bodendruck in Form einer Zahl geliefert werden, sondern auch oder alternativ eine Farbanzeige mit den Farben grün/gelb/rot, wobei grün eine zulässige Belastung anzeigt, rot eine unzulässige Belastung anzeigt und gelb eine Grenzbelastung zwischen zulässiger und unzulässiger Belastung anzeigt. Es ist auch ein prozentuales Feedback denkbar, bei dem angezeigt wird, wieviel Prozent des maximal zulässigen Bodendrucks erreicht sind.

Entsprechend der Erfindung ist es vorgesehen, dass bei dem Verfahren zum Bestimmen des maximal zulässigen Bodendrucks eine manuelle Eingabe durch die Bedienperson und/oder eine automatische Messung des maximal zulässigen Bodendrucks durchgeführt wird.

In einem bevorzugten Ausführungsbeispiel ist denkbar, dass eine Einstellung der Gerätekonfiguration der Arbeitsmaschine insbesondere durch die Bedienperson durchgeführt wird. Hierdurch kann das erfindungsgemäße Verfahren vorteilhafterweise an eine umgebaute oder veränderte Arbeitsmaschine entsprechend angepasst werden. Eine Einstellung der Gerätekonfiguration kann auch automatisch über entsprechende Sensoren erfolgen.

In einem weiteren bevorzugten Ausführungsbeispiel ist denkbar, dass eine Erfassung der aktuellen Geometrie der Arbeitsmaschine durchgeführt wird. Die aktuelle Geometrie kann sich dabei beispielsweise dadurch ändern, dass Ausleger aus- oder eingefahren werden oder das Stützen umpositioniert werden. Sollte sich die Geometrie der Arbeitsmaschine hierbei während eines Arbeitsvorgangs ändern, so ist es vorteilhaft möglich, in Echtzeit darauf einzugehen und das Verfahren entsprechend dynamisch anzupassen. Die Erfassung der aktuellen Geometrie der Arbeitsmaschine kann dabei automatisch beispielsweise über entsprechende Sensoren erfolgen.

In einem weiteren bevorzugten Ausführungsbeispiel ist denkbar, dass eine Erfassung der aktuellen Last der Arbeitsmaschine durchgeführt wird, und/oder dass eine Berechnung der Belastung der Arbeitsmaschine durchgeführt wird. Vorteilhafterweise kann so eine dynamische Anpassung der entsprechenden Parameter innerhalb des Verfahrensablaufs vorgenommen werden. Verändert sich die Last der Arbeitsmaschine oder deren Belastung beispielsweise aufgrund von Arbeitsbewegungen der Arbeitsmaschine oder geänderten Windverhältnissen oder ähnlichen Faktoren so ist er verfahrensgemäß möglich, dies bei der Bodendruckbegrenzung zu berücksichtigen.

In einem weiteren bevorzugten Ausführungsbeispiel ist denkbar, dass die Einstellung der Gerätekonfiguration der Arbeitsmaschine die Einstellung einer Ballastierung und/oder einer Mäklerlänge und/oder die Einstellung weiterer Komponenten der Arbeitsmaschine umfasst.

Die vorliegende Erfindung betrifft ein Ramm- und/oder Bohrgerät mit einer Sensorik und Steuerung, die mittels Algorithmen zum Durchführen des Verfahrens nach einem der Ansprüche 1 bis 7 konfiguriert ist.

In einem besonders bevorzugten Ausführungsbeispiel ist dabei denkbar, dass eine aus dem Stand der Technik, wie beispielsweise der DE 20 100 489 U1, bekannte Sensorvorrichtung zur automatischen Messung des maximal zulässigen Bodendrucks vorgesehen ist.

Weitere Einzelheiten und Vorteile der Erfindung werden anhand der Figur dargestellt. Dabei zeigen:
- Figur 1:: Schematischer Ablauf eines erfindungsgemäßen Verfahrens;
- Figur 2:: Arbeitsmaschine; und
- Figur 3:: Schematische Darstellung der Bodenbelastung bei einer Arbeitsmaschine.

Verfahrensgemäß wird in einem Schritt analog zur Lastmomentbegrenzung von Raupenkranen vom Fahrer bzw. von der Bedienperson der Arbeitsmaschine die aktuelle Gerätekonfiguration (Mäklerlänge, Ballastierung etc.) eingestellt und durch ein Rechenmodell und entsprechende Sensoren die aktuelle Gerätebelastung ermittelt und der Bodendruck berechnet. Entsprechende Lastmomentbegrenzungen mit Berücksichtigung des Bodendrucks der Maschine sind aus dem Stand der Technik bekannt.

Wesentlich ist, dass neben der Erfassung und Limitierung des Lastmoments der daraus berechnete Bodendruck mit einem Grenzwert verglichen wird.

Der Grenzwert kann entweder ein den jeweiligen Baustellenverhältnissen entsprechender, manuell einzugebender Grenzwert sein (z.B. durch Gutachter ermittelt) oder aber in weiterer Folge ist es vorstellbar, den max. zulässigen Bodendruck laufend durch das Gerät zu ermitteln. Dementsprechende Sensorik ist entsprechend bereitzustellen.

Der Vergleich des aktuell vom Gerät erzeugten Bodendrucks mit dem Grenzwert soll dem Fahrer angezeigt (grün/gelb/rot, prozentuell oder dergleichen) werden. Ebenso kann ein Überschreiten des Grenzwerts durch die Lastmomentbegrenzung verhindert werden (-> zusätzliches Abschaltkriterium).

Die wesentlichen Neuerungen sind also der Vergleich des Bodendrucks mit einem Grenzwert sowie die Berücksichtigung des ertragbaren Bodendrucks als neues Abschaltkriterium.

Dadurch ist es möglich, zum einen auf tragfähigem Untergrund die max. zulässige Ausnutzung des Gerätes zu ermitteln und dem Fahrer entsprechend zu visualisieren, zum anderen kann ein drohendes Versagen des Untergrundes frühzeitig erkannt werden und damit ein Umstürzen des Gerätes in vielen Fällen vermieden werden.

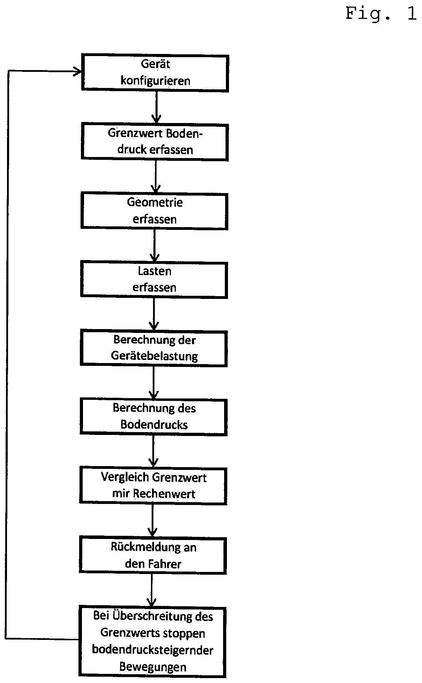

Bezugnehmend auf das in der Figur 1 gezeigte Ausführungsbeispiel soll die vorliegende Erfindung nunmehr näher beschrieben werden. Der Verfahrensablauf gemäß Figur 1 ist dabei nicht als zwangsläufig zu verstehen. Wo dies dem Grundgedanken der Erfindung nicht widerspricht, können die einzelnen Schritte auch in geänderter Reihenfolge ablaufen oder gänzlich entfallen. Gemäß dem Ablaufschema der Figur 1 wird in einem Ausführungsbeispiel der Erfindung zunächst verfahrensgemäß das Gerät bzw. die Arbeitsmaschine konfiguriert. Dabei kann insbesondere verfahrensgemäß die Ballastierung, die Mäklerlänge im Falle eines Rammgeräts, die Betriebsart des Arbeitsgeräts bzw. der Arbeitsmaschine oder es können sonstige Parameter konfiguriert werden. Es ist denkbar, dass die Konfigurierung manuell von dem Bedienpersonal durchgeführt wird, oder dass zur Konfigurierung spezielle Sensoren bereitgestellt sind, die automatische die aktuelle Konfiguration der Arbeitsmaschine erfassen. Die Konfigurierung kann auch teilweise über Sensoren und teilweise manuell durch das Bedienpersonal durchgeführt werden.

In einem weiteren Schritt kann dann ein Grenzwert des zulässigen Bodendrucks erfasst werden. Hierzu kann eine manuelle Eingabe durch den Fahrer bzw. durch Bedienpersonal des Arbeitsgeräts erfolgen. Ebenso ist es alternativ oder zusätzlich denkbar, dass Messungen durch das Arbeitsgerät oder durch Hilfsgeräte mittels einer geeigneten Sensorik zur Erfassung des Grenzwerts des zulässigen Bodendrucks durchgeführt werden. Weiter ist es denkbar, den zulässigen Grenzwert von der Bauleitung mittels einer gängigen Datenübertragungseinrichtung von einer externen Datenverarbeitungsmaschine auf die Maschinensteuerung zu übertragen und dem Fahrer anzuzeigen. Mobile Baumaschinen sind oftmals mit Vorrichtungen zur Positionsbestimmung (z.B. GPS, DGPS) ausgestattet. Dadurch kann erkannt werden, wenn eine derartige Maschine auf der Baustelle in einen Bereich einfährt, bei dem aufgrund geologischer oder baulicher Gegebenheiten (Hohlräume, Kanäle etc. im Untergrund) ein anderer Grenzwert für den Bodendruck zulässig ist. Vorteilhaft kann dann der aktuell zulässige Grenzwert automatisch auf die Maschine übertragen und am Display gezeigt werden.

In einem weiteren Schritt kann die Geometrie des Arbeitsgeräts erfasst werden, wobei insbesondere die Ausladung und Neigung des Arbeitsgeräts Berücksichtigung finden können. Mit Geometrie des Arbeitsgeräts kann hierbei auch der Aufbau bzw. die Anordnung der einzelnen Komponenten des Geräts gemeint sein. Gegebenenfalls vorhandene Stützen zum Abstützen des Geräts sowie die Ausladung der Stützen fallen hierbei genauso darunter wie Ausleger oder Ballastgewichte.

In einem weiteren Schritt kann vorgesehen sein, dass an der Arbeitsmaschine befindliche Lasten erfasst werden, wobei die Messung beispielsweise über diverse Seilzüge und/oder Zylinderdrücke erfolgen kann. Mit Lasten kann dabei ein Gewicht gemeint sein, dass von der Arbeitsmaschine während deren üblicher Arbeitstätigkeit bewegt wird. Dabei kann es sich um das Gewicht von Teilen der Maschine selbst und/oder um das Gewicht von bewegtem Fördergut handeln.

In einem weiteren Schritt kann vorgesehen sein, dass eine Berechnung der Gerätebelastung erfolgt, wobei an sich bekannte Algorithmen Verwendung finden können. Hierbei ist besonders die Belastung relevant, die in die Teile der Maschine eingeleitet wird, welche der Abstützung der Maschine dienen. Dabei kann es sich beispielsweise um Abstützungen und/oder um Teile des Fahrwerks handeln.

Durch Verwendung weiterer an sich bekannter Algorithmen kann in einem weiteren Schritt die Berechnung des Bodendrucks erfolgen. Ist die Belastung des Geräts im vorigen Schritt ermittelt worden, so kann unter Berücksichtigung der Auflagefläche der Maschine der tatsächliche Bodendruck berechnet werden.

Zur verfahrensgemäßen Durchführung der Bodendruckbegrenzung kann ferner der zuvor erfasste Grenzwert in einem weiteren Schritt mit dem berechneten Wert der Bodenbelastung verglichen werden. Aus diesem Vergleich kann in einem weiteren Schritt eine entsprechende Rückmeldung an den Fahrer erfolgen. Selbstverständlich ist dabei so vorzugehen, dass der Fahrer rechtzeitig vor Erreichen von kritischen Situationen, bei denen der tatsächlich anliegende Bodendruck dem maximal zulässigen Bodendruck nahekommt, entsprechend gewarnt bzw. informiert wird.

Optional ist es ferner möglich, bei der Überschreitung des zulässigen Grenzwerts verfahrensgemäß ein Stoppen der bodendrucksteigernden Bewegung zu veranlassen. Hierzu ist denkbar, dass verfahrensgemäß die von der Arbeitsmaschine durchgeführten Bewegungen erfasst werden. Wird dann festgestellt, dass ein zulässiger Grenzwert überschritten wurde, so kann verfahrensgemäß beispielsweise die zuletzt von der Arbeitsmaschine durchgeführte Bewegung angehalten werden. Es können selbstverständlich auch weitere oder andere als die zuletzt durchgeführte Bewegung angehalten werden.

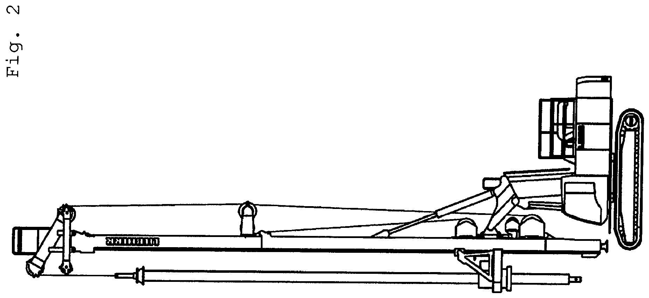

Figur 2 zeigt eine beispielhafte Arbeitsmaschine, wobei im vorliegenden Fall ein Ramm- und/oder Bohrgerät gezeigt ist.

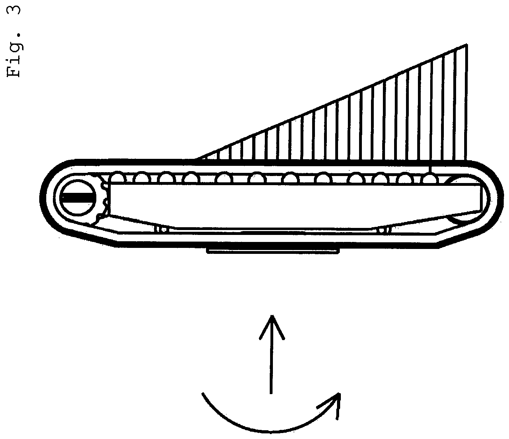

Gemäß Figur 3 ist dabei eine mögliche Bodendruckverteilung unterhalb des Arbeitsgeräts schematisch aufgezeigt. Durch die Pfeile der Figur 3 ist angedeutet, dass sowohl eine Gewichtsbelastung als auch ein Moment bedingt durch Gewicht und Arbeitsweise des Arbeitsgeräts durch das Arbeitsgerät auf den Boden wirken. Verfahrensgemäß kann dieser Bodendruck begrenzt werden.

## Patentansprüche

1. Verfahren zur Bodendruckbegrenzung während des Betriebs eines Ramm- und/oder Bohrgerätes, **gekennzeichnet durch** die Schritte:
Bestimmen eines Grenzwertes in Gestalt des maximal zulässigen Bodendrucks durch manuelle Eingabe durch die Bedienperson und / oder Durchführung einer automatischen Messung; Einstellen der aktuellen Gerätekonfiguration wie insbesondere der Mäklerlänge oder der Ballastierung;
Ermitteln der aktuellen Gerätebelastung und Berechnung des tatsächlichen Bodendrucks durch ein Rechenmodell und entsprechende Sensoren;
Vergleichen des berechneten tatsächlichen Bodendrucks mit dem Grenzwert in Gestalt des maximal zulässigen Bodendrucks und Rückmelden des Vergleichsergebnisses an die Bedienperson der Arbeitsmaschine und / oder Stoppen einer bodendrucksteigernden Bewegung der Arbeitsmaschine wenn der tatsächliche Bodendruck den Grenzwert überschreitet,
wodurch die Berücksichtigung des Grenzwertes in Gestalt des maximal zulässigen Bodendrucks zum Abschaltkriterium werden kann.

2. Verfahren nach Anspruch 1, **dadurch gekennzeichnet, dass** eine Einstellung der Gerätekonfiguration der Arbeitsmaschine insbesondere durch die Bedienperson durchgeführt wird.

3. Verfahren nach Anspruch 1 oder 2, **dadurch gekennzeichnet, dass** eine Erfassung der Geometrie der Arbeitsmaschine durchgeführt wird.

4. Verfahren nach einem der vorhergehenden Ansprüche, **dadurch gekennzeichnet, dass** eine Erfassung der Last der Arbeitsmaschine durchgeführt wird.

5. Verfahren nach einem der vorhergehenden Ansprüche, **dadurch gekennzeichnet, dass** eine Berechnung der Belastung der Arbeitsmaschine durchgeführt wird.

6. Verfahren nach einem der Ansprüche 2 bis 5, **dadurch gekennzeichnet, dass** die Einstellung der Gerätekonfiguration der Arbeitsmaschine die Einstellung einer Ballastierung und/oder einer Mäklerlänge und/oder die Einstellung weiterer Komponenten der Arbeitsmaschine umfasst.

7. Arbeitsmaschine in Form eines Ramm- und / oder Bohrgerätes mit Sensorik und Steuerung, die mittels Algorithmen konfiguriert ist, das Verfahren nach einem der Ansprüche 1 bis 6 auszuführen.

8. Arbeitsmaschine nach Anspruch 7, **dadurch gekennzeichnet, dass** eine Sensorvorrichtung zur automatischen Messung des maximal zulässigen Bodendrucks vorgesehen ist.

## Claims

1. A method for ground pressure limitation during the operation of a pile driver and/or drill, **characterized by** the steps:
determining a limit value in the form of the maximum permitted ground pressure by manual input by the operator and/or carrying out an automatic measurement; setting the current unit configuration such as in particular the pole length or the ballast;
determining the current unit load and calculating the actual ground pressure by a computing model and corresponding sensors;
comparing the calculated actual ground pressure with the limit value in the form of the maximum permitted ground pressure; and reporting the comparison result to the operator of the work machine and/or stopping a movement of the work machine that increases the ground pressure when the actual ground pressure exceeds the limit value, whereby the taking into consideration of the limit value in the form of the maximum ground pressure can become the switch-off criteria

2. A method in accordance with claim 1,
**characterized in that** a setting of the unit configuration of the work machine is in particular carried out by the operator.

3. A method in accordance with claim 1 or claim 2,
**characterized in that** a detection of the geometry of the work machine is carried out.

4. A method in accordance with one of the preceding claims,
**characterized in that** a detection of the load of the work machine is carried out.

5. A method in accordance with one of the preceding claims,
**characterized in that** a calculation of the load of the work machine is carried out.

6. A method in accordance with one of the claims 2 to 5,
**characterized in that** the setting of the unit configuration of the work machine comprises the setting of a ballast and/or of a pole length and/or the setting of further components of the work machine.

7. A work machine in the form of a pile driver and/or drill having a sensor system and a control that is configured to carry out the method in accordance with one of the claims 1 to 6 by means of algorithms.

8. A work machine in accordance with claim 7,
**characterized in that** a sensor apparatus is provided for an automatic measurement of the maximum permitted ground pressure.

## Revendications

1. Procédé de limitation de la pression sur le sol pendant le fonctionnement d'un engin de battage et/ou de forage, **caractérisé par** les étapes consistant à :
déterminer une valeur limite sous la forme de la pression sur le sol maximale admissible par saisie manuelle par la personne opératrice et/ou exécuter une mesure automatique ; régler la configuration actuelle de l'engin telle que, en particulier, la longueur du mât ou le lestage ;
déterminer la sollicitation actuelle de l'engin et calculer la pression sur le sol réelle par un modèle de calcul et des capteurs correspondants ;
comparer la pression sur le sol réelle calculée à la valeur limite sous la forme de la pression sur le sol maximale admissible et notifier en retour le résultat de la comparaison à la personne opératrice de la machine de travail et/ou arrêter un mouvement augmentant la pression sur le sol de la machine de travail quand la pression sur le sol réelle dépasse la valeur limite, moyennant quoi la prise en compte de la valeur limite sous la forme de la pression sur le sol maximale admissible peut devenir le critère d'arrêt.

2. Procédé selon la revendication 1, **caractérisé en ce qu'**un réglage de la configuration de l'engin de la machine de travail est effectué en particulier par la personne opératrice.

3. Procédé selon la revendication 1 ou 2, **caractérisé en ce qu'**une détection de la géométrie de la machine de travail est effectuée.

4. Procédé selon l'une des revendications précédentes, **caractérisé en ce qu'**une détection de la charge de la machine de travail est effectuée.

5. Procédé selon l'une des revendications précédentes, **caractérisé en ce qu'**un calcul de la sollicitation de la machine de travail est effectué.

6. Procédé selon l'une des revendications 2 à 5, **caractérisé en ce que** le réglage de la configuration de l'engin de la machine de travail comprend le réglage d'un lestage et/ou d'une longueur de mât et/ou le réglage d'autres composants de la machine de travail.

7. Machine de travail sous la forme d'un engin de battage et/ou de forage, comprenant un système de capteurs et une commande, qui est configurée au moyen d'algorithmes pour exécuter le procédé selon l'une des revendications 1 à 6.

8. Machine de travail selon la revendication 7, **caractérisée en ce qu'**un dispositif de détection pour la mesure automatique de la pression sur le sol maximale admissible est prévu.
